# EUROPEAN PATENT SPECIFICATION

(11) **EP 2 832 625 B1**
(45) Date of publication and mention of the grant of the patent: **08.11.2017**
(21) Application number: 14179471.9
(22) Date of filing: 01.08.2014
(51) Int. Cl.: B62B 7/14

(54) **A stroller frame and a foldable and detachable chair frame**
Rahmen für Kinderwagen sowie faltbares und abnehmbares Sitzgestell
Cadre de poussette et cadre de siège pliable et démontable

(30) Priority: 02.08.2013 CN 201310333427; 02.08.2013 CN 201320469240 U
(43) Date of publication of application: 04.02.2015
(73) Proprietor: Dorel Juvenile (Zhongshan) Product Co., Ltd., Zhong Shan Guangdong (CN)
(72) Inventor: Su, Jia-Hong, 651 Beigang Township, Yunlin County (TW); Wu, Tse-Chien, 802 Kaohsiung City (TW); Cheng, Hsin-Fu, 600 Chiayi City (TW)
(74) Representative: Ter Meer Steinmeister & Partner

(56) References cited:
- WO-A2-2009/077787
- DE-U1-202011 108 040
- US-A1- 2009 102 162
- US-A1- 2013 113 185

## Description

### BACKGROUND OF THE INVENTION

### FIELD OF THE INVENTION

The present invention relates a chair frame for mounting on a stroller frame, especially to a foldable and detachable chair frame which can be folded together with a stroller frame, and the inclination of the chair frame is adjustable by manipulating an actuator mounted on the chair frame.

### DESCRIPTION OF THE RELATED ART

Some time, when baby sat in a stroller chair and facing forward may cry due to she cannot see the care-giver. In this moment, the care-giver cannot try to interact with the baby occupant eye-to-eye and smooth her timely.

To solve this problem, there is a new kind of stroller chair being available in the market that can be installed on a stroller frame in either forward or rearward direction. However, such new kind of stroller chair cannot be folded, therefore should be separated from the stroller frame before the user beginning to fold the stroller frame. A new problem is the users have to separate and reinstall the stroller chair again and again, that causes a lot of troublesome to them in daily use.
US 2013/0113185 A1 describes a baby stroller formed by a stroller frame and a chair. The stroller frame includes a rotatable base and the chair includes a folding joint, such that the chair can be folded directly onto the stroller frame.

### SUMMARY OF THE INVENTION

For solving the aforementioned new problem, the present invention provides a stroller frame and a foldable and detachable chair frame according to the independent claim. The foldable and detachable chair frame equips with a pair of sockets connected to the stroller frame spaced apart from each other and a chair frame detachably mounted on the stroller frame.

The chair frame has a pair of connectors mounted on both sides thereof for detachably coupling the chair frame to the stroller frame by inserting the connectors into the pair of sockets respectively. As the chair frame is detachable from the stroller frame, users can reinstall it in either forward or reward direction of the stroller frame as they wished.

The chair frame comprises a backrest section, a seat section, a pair of lockable joints and a release actuator. The pair of lockable joints is lockably and pivotably connecting the backrest section and the seat section.

By manipulating the pair of lockable joints, the chair frame may be locked in a deployed configuration and a folded configuration. The release actuator is use for unlocking the pair of lockable joints thereby permitting backrest section to rotate so as to convert the chair frame from the deployed configuration to the folded configuration. Due to the chair frame cab be converted into the folded configuration, and be foldable together with the stroller frame without separating from the stroller frame before actuating the folding operation. By this way, users can save the troublesome of reinstalling the chair frame, and easy to move by car and save the traffic cost in shipping from a manufactory to the market for sell.

The connectors are each being formed with a plurality of first position indents, the lockable joints include a plate, an upper joint part, a lower joint part and a positioning mechanism. The plate is pivoted to the connectors by a pivot element. The plate is formed with a plurality of second position indents corresponding to the first position indents. The upper joint part has a portion connected with the backrest section, and a portion pivoted between the connectors and plate and being formed with a third position indents on one side thereof. The lower joint part has a portion connected with the seat section, and a portion pivoted between the connectors and plate and formed with a fourth position indents on one side thereof.

The positioning mechanism is operatively mounted on the chair frame and releasably engaging with the third position indents, fourth position indents, and one of the first position indents and the second position indents in the same time thereby positioning the chair frame in a selected inclination position.

### BRIEF DESCRIPTION OF THE DRAWINGS

The accompanying drawings, which are included to provide a further understanding of the invention are incorporated in and constitute a part of this specification, illustrate embodiments of the invention and together with the description serve to explain the principles of the invention. In the drawings:
FIG. 1 is a perspective view of a foldable and detachable chair frame according to the present invention to be mounted on a stroller frame;
FIG. 2 is an exploded view of the foldable and detachable chair frame of FIG. 1;
FIG. 3 is a perspective view of the foldable and detachable chair frame of FIG. 1 as being converted into a folded configuration;
FIG. 4 is a perspective view of a lockable joint of the foldable and detachable chair frame of FIG. 1;
FIG. 5 is a schematic perspective view for illustrating the operation to adjust the inclination of the foldable and detachable chair frame of FIG. 1;
FIG. 6 is a schematic perspective view for illustrating the inclination adjustment of the foldable and detachable chair frame of FIG. 1;
FIG. 7 is a schematic cross-sectional showing a lockable joint of the foldable and detachable chair frame according to the present invention;
FIG. 8 is a schematic cross-sectional showing the operation for unlocking the lockable joint of the FIG. 6;
FIG. 9 is a schematic side showing the foldable and detachable chair frame which is converted from an erected configuration to a folded configuration by unlocking the lockable joint of the FIG. 6.

### DETAILED DESCRIPTION OF THE PREFERRED EMBODIMENTS

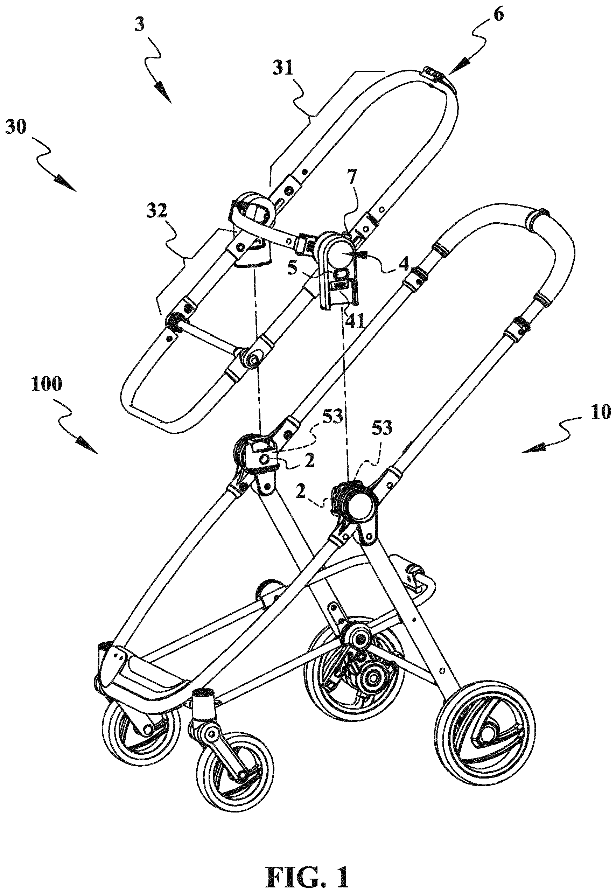

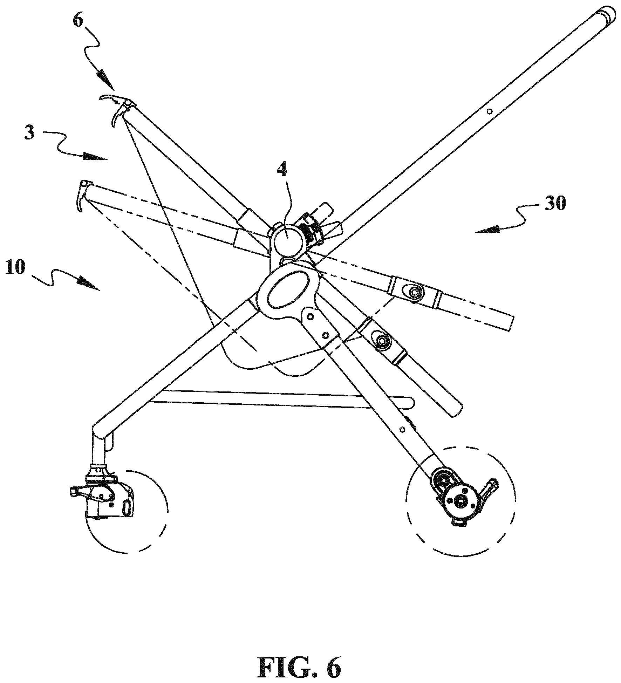

Referring to FIGS. 1 to 3, 6 and 9, an embodiment of the foldable and detachable chair frame according to the present invention, is equipped with a pair of sockets 2 connected to the stroller frame 10 spaced apart from each other and a chair frame 3 detachably mounted on the stroller frame 10.

The chair frame 3 has a pair of connectors 41 mounted on both its sides for detachably coupling the chair frame 3 to the stroller frame 10 by inserting the connectors 41 into the pair of sockets 2 respectively. As the chair frame 3 is detachable from the stroller frame 10, users can reinstall it in either forward or reward direction of the stroller frame 10 as they wished.

The chair frame 3 may further comprise a backrest section 31, a seat section 32, a pair of lockable joints 4 and a release actuator 7. The pair of lockable joints 4 is lockably and pivotably connecting the backrest section 31 and the seat section 32. In one embodiment, the backrest section 31 and the seat section 32 each may be embodied as a U-shaped metal frame or a plastic made parts, a fabric cover may be stretched by the U-shaped metal frame or the plastic-made parts for providing a comfortable support for occupants.

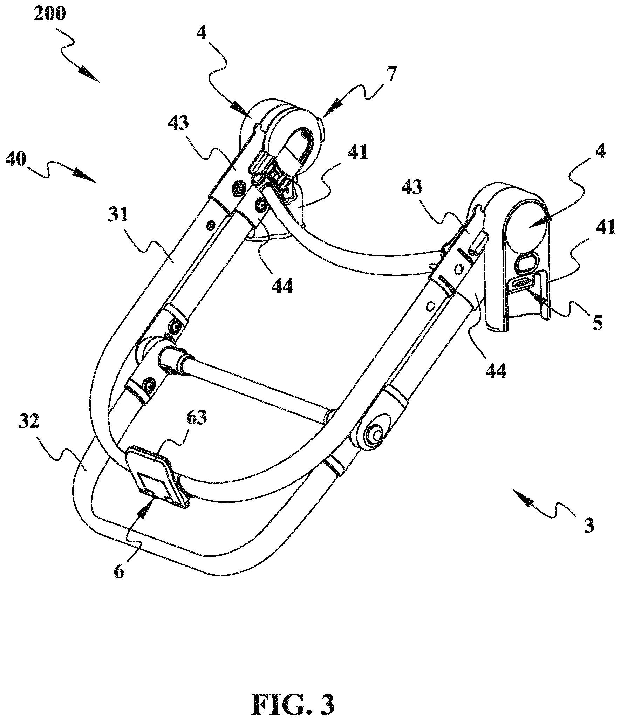

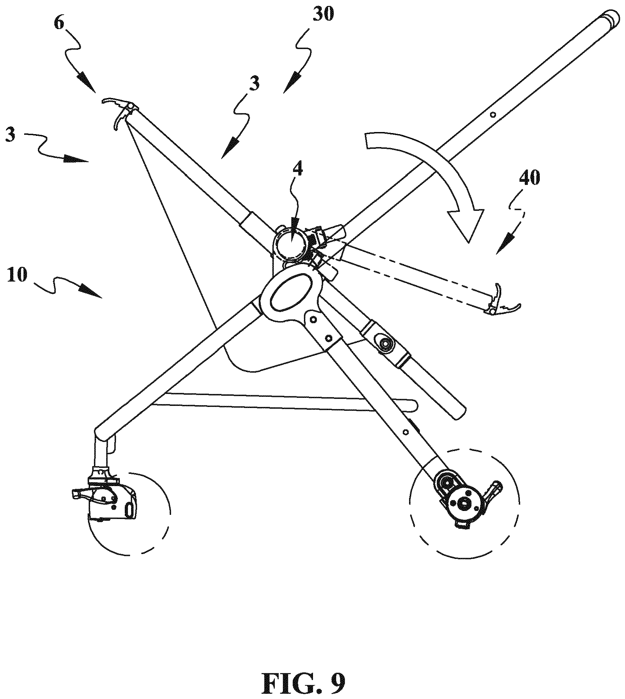

By manipulating the pair of lockable joints 4, the chair frame 3 may be locked in a deployed configuration 100 by locking the lockable joints 4 to retain the backrest section 31 in a first position 30 as shown in FIG. 1, and can be converted to a folded configuration 200 by unlocking the lockable joints 4 and rotate the backrest section 31 to a second position 40, as shown in FIGS. 3 and 9.

The release actuator 7 is use for unlocking the pair of lockable joints 4 thereby permitting backrest section 31 to rotate from the first position 30 to the second position 40 so as to convert the chair frame 3 from the deployed configuration 100 to the folded configuration 200. Due to the chair frame 3 cab be converted into the folded configuration 200, and be foldable together with the stroller frame 10 without separating from the stroller frame 10 before actuating the folding operation. This can save the troublesome of reinstalling the chair frame 3, easy to move by car and save the traffic cost in shipping from a manufactory to the market for sell.

For firmly connecting the chair frame 3 to the stroller frame 10, the chair frame 3 may further include a positioning mechanism 5 mounted between the pair of connectors 41 and the pair of sockets 2 for retaining the pair of connectors 41 in the pair of sockets 2.

Specifically, the positioning mechanism 5 includes two engage portions 53 and two first buttons 51. The two engage portions 53 may be two holes formed in the sockets 2 respectively, and the two first buttons 51 may be mounted on the connectors 41 respectively. In one embodiment, the two first buttons 51 may be biased by two resilient elements 52 to engage with the engage portions 53 for preventing the chair frame 3 departing from the stroller frame 10. When the two first buttons 51 being pressed against the two resilient elements 52, shall be moved to disengage from the engage portions 53, and then permit to lift the chair frame 3 up from the stroller frame 10.

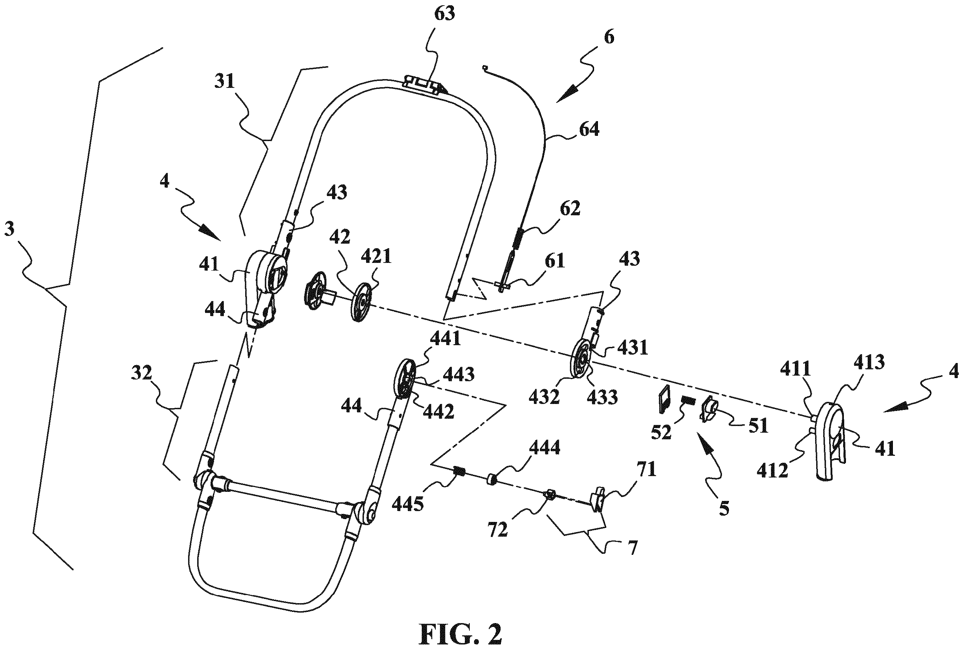

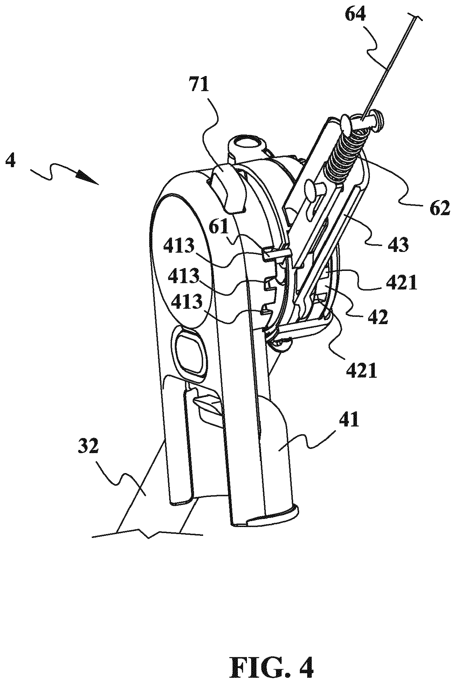

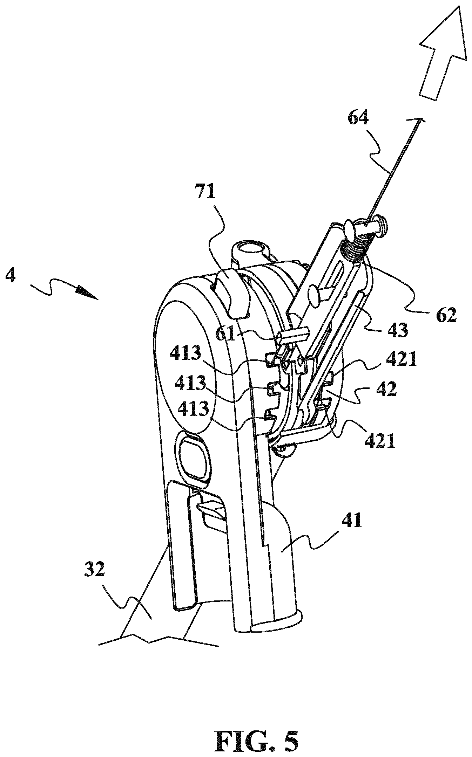

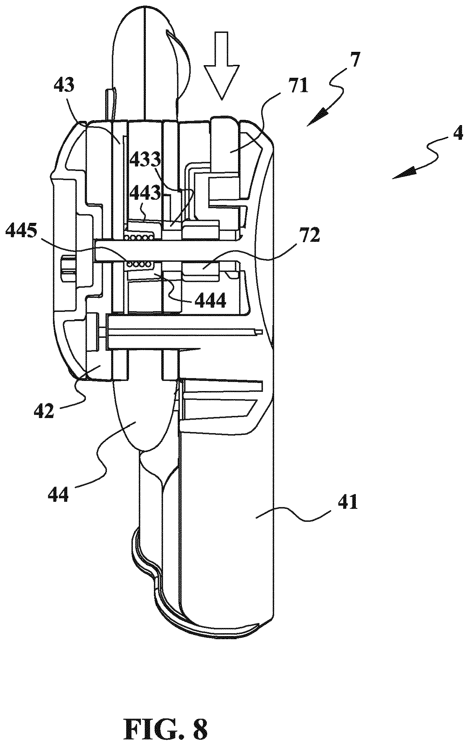

Referring to FIGS. 4 and 5, the connectors 41 each may be formed with a plurality of first position indents 413, and referring to FIGS. 2, 7 to 8, the lockable joints 4 may include a plate 42, an upper joint part 43, a lower joint part 44 and a positioning mechanism 6. In this embodiment, the plate 42 is pivoted to the connectors 41 by a pivot element 411, the plate 42 is formed with a plurality of second position indents 421 corresponding to the first position indents 413. The upper joint part 43 has a portion connected with the backrest section 31, and a portion pivoted between the connectors 41 and plate 42 and being formed with a third position indents 431 on one side thereof.

The lower joint part 44 has a portion connected with the seat section 32, and a portion pivoted between the connectors 41 and plate 42 and formed with a fourth position indents 441 on one side thereof.

The positioning mechanism 6 is operatively mounted on the chair frame 3 and releasably engaging with the third position indents 431, fourth position indents 441, and one of the first position indents 413 and the second position indents 421 in the same time thereby positioning the chair frame 3 in a selected inclination position.

Specifically, the positioning mechanism 6 may include two latch elements 61, a release actuator 63 and a pair of connecting elements 64. The two latch elements 61 are retractively mounted at two distal ends of the backrest section 31 and biased by two resilient elements 62 for engaging with the third position indents 431, fourth position indents 441, and one of the first position indents 413 and the second position indents 421 in the same time so as to lock the chair frame 3 in the selected inclination position.

The release actuator 63 may be operatively mounted on the backrest section 31 for driving the two latch elements 61 to disengage from the first position indents 413, the second position indents 421, the third position indents 431 and fourth position indents 441 in the same time, so as to reposition the chair frame 3 into another inclination position. In this embodiment, the pair of connecting elements 64 is connected between the release actuator 63 and the two latch elements 61.

In one embodiment, the release actuator 63 is operatively mounted on a middle portion of the backrest section 31 for manipulating by one hand, and the release actuator 63 is associated with the two latch elements 61 through the pair of connecting elements 64. However, the positioning mechanism 6 may include two release actuators 63 for mounted on both sides of the backrest section 31 respectively for manipulating with both hands of user, and each of the release actuators 63 is associated with one of the two latch elements 61 through one of the pair of connecting elements 64.

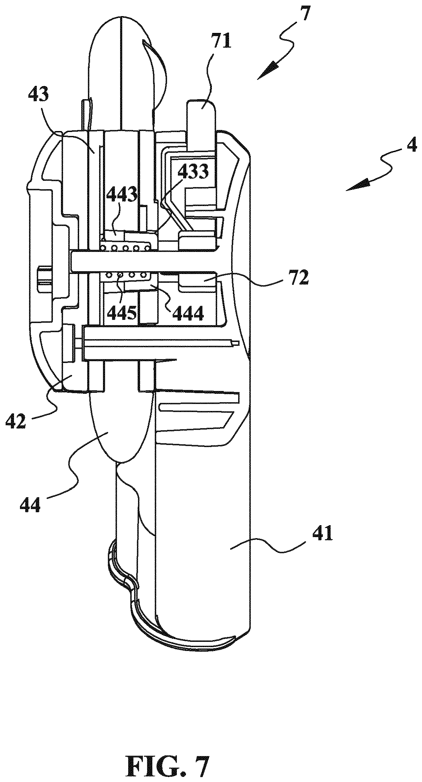

Referring back to FIGS. 7 to 8, in one embodiment the lockable joints 4 includes a sliding element 444 biased by a resilient element 445 to engage with the upper joint part 43 and the lower joint part 44 in the same time thereby preventing the upper joint part 43 from rotation relative to the lower joint part 44. In this embodiment, the release actuator 7 includes a second button 71 for pressing the sliding element 444 against the resilient element 445 so as to disengage the sliding element 444 from one of the upper joint part 43 and the lower joint part 44 thereby permitting the backrest section 31 to rotate from the first position 30 to the second position 40.

Preferably, the release actuator 7 may further include an associating element 72 movably mounted between the sliding element 444 and the second button 71. By this arrangement, when the second button 71 is pressed against the resilient element 445, the associating element 72 is driven to push the sliding element 444 to disengage from the upper joint part 43 thereby unlocking the lockable joints 4 from the deployed configuration 100.

Specifically, in one embodiment the upper joint part 43 is formed with a first engage slot 433 for slidably receiving a first portion of the sliding element 444, and the lower joint part 44 is formed with a second engage slot 443 for slidably receiving a second portion of the sliding element 444. When the sliding element 444 is driven by the release actuator 7, shall then leave one of the first engage slot 433 and second engage slot 443 thereby unlocking the pair of lockable joints 4.

For preventing the backrest section 31 from overturning rearward that may cause the occupant to fall from the chair, the upper joint part 43 is preferably formed with a first arched slot 432, and the connectors 41 may be equipped with a pin 412 inserted into the first arched slot 432 thereby limiting the rotation of the upper joint part 43 in a predetermined range.

For preventing the chair frame 3 from overturning either rearward or rearward during adjusting the inclination thereof, the lower joint part 44 is preferably formed with a second arched slot 442, and permits the pin 412 inserted into the first arched slot 432 and the second arched slot 442 thereby limiting the inclination of the chair frame 3 in an adjustable range.

As being illustrated, the inclination of the chair frame 3 can be adjusted by manipulating the positioning mechanism 6, the folding of the chair frame 3 can be actuated by pressing the second button 71, and the chair frame 3 can be released and lifted from the stroller frame 10 by pressing the two first buttons 51.

According to the present invention, the user can reinstall the chair frame 3 on a stroller frame 10 in either forward or reward direction of the stroller frame 10 as they wished. More importantly, the user can save the troublesome of separating and reinstalling the chair frame 3 on the stroller frame 10. The chair frame 3 and the stroller frame 10 may be folded together and converted into a compact size for easy loading in an automobile trunk for transportation. By folding into a compact size, the stroller frame 10 coupling with such a foldable and detachable chair frame 3 shall save the traffic cost in shipping from a manufactory to the market for sell.

## Claims

1. A stroller frame (10) and a foldable and detachable chair frame for mounting on the stroller frame (10), including:
a pair of sockets (2) connected to the stroller frame (10) spaced apart from each other;
a chair frame (3) having a pair of connectors (41) mounted on both sides thereof for detachably coupling the chair frame (3) to the stroller frame (10) by inserting the connectors (41) into the pair of sockets (2) respectively;
wherein the chair frame (3) further comprising:
a backrest section (31), a seat section (32), and a pair of lockable joints (4) lockably and pivotably connecting the backrest section (31) and the seat section (32);
wherein the chair frame (3) has a deployed configuration (100) by locking the lockable joints (4) to retain the backrest section (31) in a first position (30), and a folded configuration (200) by unlocking the lockable joints (4) to permit the backrest section (31) to rotate to a second position (40); and
a release actuator (7) for unlocking the pair of lockable joints (4) thereby permitting backrest section (31) to rotate from the first position (30) to the second position (40),
wherein the connectors (41) each being formed with a plurality of first position indents (413), and the lockable joints (4) each including:
a plate (42) pivoted to the connectors (41) by a pivot element (411), the plate (42) being formed with a plurality of second position indents (421) corresponding to the first position indents (413);
an upper joint part (43), having a portion connected with the backrest section (31), and a portion pivoted between the connectors (41) and plate (42) and formed with third position indents (431) on one side thereof;
a lower joint part (44), having a portion connected with the seat section (32), and a portion pivoted between the connectors (41) and plate (42) and formed with fourth position indents (441) on one side thereof; and
a positioning mechanism (6), operatively mounted on the chair frame (3) and releasably engaging with the third position indents (431), fourth position indents (441), and one of the first position indents (413) and the second position indents (421) thereby positioning the chair frame (3) in a selected inclination position.

2. The stroller frame (10) and the foldable and detachable chair frame according to claim 1, further include a positioning mechanism (5) mounted between the pair of connectors (41) and the pair of sockets (2) for retaining the pair of connectors (41) in the pair of sockets (2).

3. The stroller frame (10) and the foldable and detachable chair frame according to claim 2, wherein the positioning mechanism (5) including:
two engage portions (53), formed in the sockets (2) respectively;
two first buttons (51), mounted on the connectors (41) respectively, the two first buttons (51) being biased by two resilient elements (52) to engage with the engage portions (53) for preventing the chair frame (3) departing from the stroller frame (10); and
the two first buttons (51) can be pressed against the two resilient elements (52) to disengage from the engage portions (53) thereby releasing the chair frame (3) from the stroller frame (10).

4. The stroller frame (10) and the foldable and detachable chair frame according to claim 1, wherein the positioning mechanism (6) including:
two latch elements (61), retractively mounted at two distal ends of the backrest section (31) and biased by two resilient elements (62) for engaging with the third position indents (431), fourth position indents (441), and one of the first position indents (413) and the second position indents (421) so as to lock the chair frame (3) in the selected inclination position; a release actuator (63) operatively mounted on the backrest section (31) for driving the two latch elements (61) to disengage from the first position indents (413), the second position indents (421), the third position indents (431) and fourth position indents (441) so as to reposition the chair frame (3) into another inclination position; and
a pair of connecting elements (64) connected between the release actuator (63) and the two latch elements (61).

5. The stroller frame (10) and the foldable and detachable chair frame according to claim 4, wherein the release actuator (63) is operatively mounted on a middle portion of the backrest section (31) for manipulating by one hand, and the release actuator (63) is associated with the two latch elements (61) through the pair of connecting elements (64).

6. The stroller frame (10) and the foldable and detachable chair frame according to claim 4, wherein the positioning mechanism (6) includes two release actuators (63) mounted on both sides of the backrest section (31) for manipulating with both hands of user, and each of the release actuators (63) is associated with one of the two latch elements (61) through one of the pair of connecting elements (64).

7. The stroller frame (10) and the foldable and detachable chair frame according to claim 1, wherein the lockable joints (4) includes a sliding element (444) biased by a resilient element (445) to engage with the upper joint part (43) and the lower joint part (44) thereby preventing the upper joint part (43) from rotation relative to the lower joint part (44), and the release actuator (7) includes a second button (71) for pressing the sliding element (444) against the resilient element (445) so as to disengage the sliding element (444) from one of the upper joint part (43) and the lower joint part (44) thereby permitting the backrest section (31) to rotate from the first position (30) to the second position (40).

8. The stroller frame (10) and the foldable and detachable chair frame according to claim 7, wherein the release actuator (7) further include an associating element (72) movably mounted between the sliding element (444) and the second button (71), when the second button (71) is pressed against the resilient element (445), the associating element (72) is driven to push the sliding element (444) to disengage from the upper joint part (43) thereby unlocking the lockable joints (4) from the deployed configuration (100).

9. The stroller frame (10) and the foldable and detachable chair frame according to claim 1, wherein the upper joint part (43) is formed with a first arched slot (432), and the connectors (41) has a pin (412) inserted into the first arched slot (432) thereby limiting the rotation of the upper joint part (43) in a predetermined range.

10. The stroller frame (10) and the foldable and detachable chair frame according to claim 9, wherein the lower joint part (44) is formed with a second arched slot (442), and the pin (412) is inserted into the first arched slot (432) and the second arched slot (442) thereby limiting the inclination of the chair frame (3) in an adjustable range.

11. The stroller frame (10) and the foldable and detachable chair frame according to claim 1, wherein the upper joint part (43) is formed with a first engage slot (433) for slidably receiving a first portion of the sliding element (444), and the lower joint part (44) is formed with a second engage slot (443) for slidably receiving a second portion of the sliding element (444), wherein the sliding element (444) can be driven by the release actuator (7) to leave one of the first engage slot (433) and second engage slot (443) thereby unlocking the pair of lockable joints (4).

## Patentansprüche

1. Kinderwagenrahmen (10) und faltbarer und abnehmbarer Sitzrahmen zum Anbringen auf dem Kinderwagenrahmen (10), die Folgendes enthalten:
ein Paar Muffen (2), die voneinander beabstandet mit dem Kinderwagenrahmen (10) verbunden sind;
einen Sitzrahmen (3) mit einem Paar Verbindungselemente (41), die zum abnehmbaren Koppeln des Sitzrahmens (3) mit dem Kinderwagenrahmen (10) durch Einfügen der Verbindungselemente (41) jeweils in das Paar Muffen (2) auf seinen beiden Seiten angebracht sind;
wobei der Sitzrahmen (3) ferner Folgendes umfasst:
einen Rückenlehnenabschnitt (31), einen Sitzabschnitt (32) und ein Paar verriegelbarer Gelenke (4), die den Rückenlehnenabschnitt (31) und den Sitzabschnitt (32) verriegelbar und schwenkbar verbinden;
wobei der Sitzrahmen (3) eine eingesetzte Konfiguration (100) durch Verriegeln der verriegelbaren Gelenke (4), um den Rückenlehnenabschnitt (31) in einer ersten Position (30) zu halten, und eine zusammengefaltete Konfiguration (200) durch Entriegeln der verriegelbaren Gelenke (4), um zu ermöglichen, dass sich der Rückenlehnenabschnitt (31) in eine zweite Position (40) dreht, aufweist; und
einen Freigabeaktuator (7) zum Entriegeln des Paares verriegelbarer Gelenke (4), wodurch ermöglicht wird, dass sich der Rückenlehnenabschnitt (31) aus der ersten Position (30) in die zweite Position (40) dreht;
wobei die Verbindungselemente (41) jeweils mit mehreren ersten Positionsvertiefungen (413) ausgebildet sind und die verriegelbaren Gelenke (4) jeweils Folgendes enthalten:
eine Platte (42), die durch ein Schwenkelement (411) zu den Verbindungselementen (41) geschwenkt wird, wobei die Platte (42) mit mehreren zweiten Positionsvertiefungen (421) ausgebildet ist, die den ersten Positionsvertiefungen (413) entsprechen;
eine obere Gelenkkomponente (43) mit einem Abschnitt, der mit dem Rückenlehnenabschnitt (31) verbunden ist, und einem Abschnitt, der zwischen den Verbindungselementen (41) und der Platte (42) geschwenkt wird und mit dritten Positionsvertiefungen (431) auf einer Seite davon ausgebildet ist;
eine untere Gelenkkomponente (44) mit einem Abschnitt, der mit dem Sitzabschnitt (32) verbunden ist, und einem Abschnitt, der zwischen den Verbindungselementen (41) und der Platte (42) geschwenkt wird und mit vierten Positionsvertiefungen (441) auf einer Seite davon ausgebildet ist; und
einen Positionierungsmechanismus (6), der funktionstechnisch auf dem Sitzrahmen (3) angebracht ist und sich mit den dritten Positionsvertiefungen (431), den vierten Positionsvertiefungen (441) und entweder den ersten Positionsvertiefungen (413) oder den zweiten Positionsvertiefungen (421) lösbar in Eingriff befindet, wodurch der Sitzrahmen (3) in einer ausgewählten, geneigten Position angeordnet ist.

2. Kinderwagenrahmen (10) und faltbarer und abnehmbarer Sitzrahmen nach Anspruch 1, die ferner einen Positionierungsmechanismus (5) enthalten, der zum Halten des Verbindungselementpaares (41) im Sockelpaar (2) zwischen dem Verbindungselementpaar (41) und dem Sockelpaar (2) angebracht ist.

3. Kinderwagenrahmen (10) und faltbarer und abnehmbarer Sitzrahmen nach Anspruch 2, wobei der Positionierungsmechanismus (5) Folgendes enthält:
zwei Eingriffsabschnitte (53), die jeweils in den Muffen (2) ausgebildet sind;
zwei erste Knöpfe (51), die jeweils auf den Verbindungselementen (41) angeordnet sind, wobei die zwei ersten Knöpfe (51) durch zwei elastische Elemente (52) vorbelastet sind, damit sie sich mit den Eingriffsabschnitten (53) in Eingriff befinden, um zu verhindern, dass sich der Sitzrahmen (3) vom Kinderwagenrahmen (10) löst; und
wobei die zwei ersten Knöpfe (51) gegen die zwei elastischen Elemente (52) gedrückt werden können, damit sie mit den Eingriffsabschnitten (53) außer Eingriff gelangen, wodurch der Sitzrahmen (3) aus dem Kinderwagenrahmen (10) freigegeben wird.

4. Kinderwagenrahmen (10) und faltbarer und abnehmbarer Sitzrahmen nach Anspruch 1, wobei der Positionierungsmechanismus (6) Folgendes enthält:
zwei Verriegelungselemente (61), die an zwei fernen Enden des Rückenlehnenabschnitts (31) einziehbar angebracht sind und durch zwei elastische Elemente (62) vorbelastet sind, damit sie sich mit den dritten Positionsvertiefungen (431), den vierten Positionsvertiefungen (441) und entweder den ersten Positionsvertiefungen (413) oder den zweiten Positionsvertiefungen (421) in Eingriff befinden, um den Sitzrahmen (3) in der ausgewählten, geneigten Position zu verriegeln;
einen Freigabeaktuator (63), der zum Antreiben der zwei Verriegelungselemente (61) derart, dass sie mit den ersten Positionsvertiefungen (413), den zweiten Positionsvertiefungen (421), den dritten Positionsvertiefungen (431) und den vierten Positionsvertiefungen (441) außer Eingriff gelangen, um den Sitzrahmen (3) in eine andere geneigte Position neu zu positionieren, funktionstechnisch auf dem Rückenlehnenabschnitt (31) angebracht ist; und
ein Paar Verbindungselemente (64), die zwischen dem Freigabeaktuator (63) und den zwei Verriegelungselementen (61) verbunden sind.

5. Kinderwagenrahmen (10) und faltbarer und abnehmbarer Sitzrahmen nach Anspruch 4, wobei der Freigabeaktuator (63) zur Betätigung mit einer Hand funktionstechnisch auf einem Mittelabschnitt des Rückenlehnenabschnitts (31) angebracht ist und der Freigabeaktuator (63) durch das Verbindungselementpaar (64) mit den zwei Verriegelungselementen (61) verbunden ist.

6. Kinderwagenrahmen (10) und faltbarer und abnehmbarer Sitzrahmen nach Anspruch 4, wobei der Positionierungsmechanismus (6) zwei Freigabeaktuatoren (63) enthält, die zum Betätigen mit beiden Händen des Anwenders auf beiden Seiten des Rückenlehnenabschnitts (31) angebracht sind, und jeder der Freigabeaktuatoren (63) durch eines aus dem Verbindungselementpaar (64) mit einem der zwei Verriegelungselemente (61) verbunden ist.

7. Kinderwagenrahmen (10) und faltbarer und abnehmbarer Sitzrahmen nach Anspruch 1, wobei die verriegelbaren Gelenke (4) ein Gleitelement (444) enthalten, das durch ein elastisches Element (445) vorbelastet ist, damit es sich mit der oberen Gelenkkomponente (43) und der unteren Gelenkkomponente (44) in Eingriff befindet, wodurch eine Drehung der oberen Gelenkkomponente (43) relativ zur unteren Gelenkkomponente (44) verhindert wird, und der Freigabeaktuator (7) einen zweiten Knopf (71) zum Drücken des Gleitelements (444) gegen das elastische Element (445), um das Gleitelement (444) entweder mit der oberen Gelenkkomponente (43) oder der unteren Gelenkkomponente (44) außer Eingriff zu bringen, enthält, wodurch ermöglicht wird, dass sich der Rückenlehnenabschnitt (31) aus der ersten Position (30) in die zweite Position (40) dreht.

8. Kinderwagenrahmen (10) und faltbarer und abnehmbarer Sitzrahmen nach Anspruch 7, wobei der Freigabeaktuator (7) ferner ein Verbindungselement (72) enthält, das zwischen dem Gleitelement (444) und dem zweiten Knopf (71) beweglich angebracht ist, wobei das Verbindungselement (72) derart angetrieben wird, dass es das Gleitelement (444) schiebt, damit es mit der oberen Gelenkkomponente (43) außer Eingriff gelangt, wenn der zweite Knopf (71) gegen das elastische Element (445) gedrückt wird, wodurch die verriegelbaren Gelenke (4) aus der eingesetzten Konfiguration (100) entriegelt werden.

9. Kinderwagenrahmen (10) und faltbarer und abnehmbarer Sitzrahmen nach Anspruch 1, wobei die obere Gelenkkomponente (43) mit einem ersten gebogenen Schlitz (432) ausgebildet ist und die Verbindungselemente (41) einen Stift (412) aufweisen, der in den ersten gebogenen Schlitz (432) eingefügt ist, wodurch die Drehung der oberen Gelenkkomponente (43) in einem vorgegebenen Bereich begrenzt wird.

10. Kinderwagenrahmen (10) und faltbarer und abnehmbarer Sitzrahmen nach Anspruch 9, wobei die untere Gelenkkomponente (44) mit einem zweiten gebogenen Schlitz (442) ausgebildet ist und der Stift (412) in den ersten gebogenen Schlitz (432) und den zweiten gebogenen Schlitz (442) eingefügt ist, wodurch die Neigung des Sitzrahmens (3) in einem einstellbaren Bereich begrenzt wird.

11. Kinderwagenrahmen (10) und faltbarer und abnehmbarer Sitzrahmen nach Anspruch 1, wobei die obere Gelenkkomponente (43) mit einem ersten Eingriffsschlitz (433) zum gleitenden Aufnehmen eines ersten Abschnitts des Gleitelements (444) ausgebildet ist und die untere Gelenkkomponente (44) mit einem zweiten Eingriffsschlitz (443) zum gleitenden Aufnehmen eines zweiten Abschnitts des Gleitelements (444) ausgebildet ist, wobei das Gleitelemente (444) durch den Freigabeaktuator (7) derart angetrieben werden kann, dass es entweder den ersten Eingriffsschlitz (433) oder den zweiten Eingriffsschlitz (443) verlässt, wodurch das Paar verriegelbarer Gelenke (4) entriegelt wird.

## Revendications

1. Châssis de poussette (10) et châssis de siège pliable et détachable destiné à être monté sur le châssis de poussette (10), incluant :
une paire de socles (2) connectés au châssis de poussette (10) et espacés l'un de l'autre ;
un châssis de siège (3) ayant une paire de connecteurs (41) montés sur les deux côtés de celui-ci pour coupler de façon détachable le châssis de siège (3) sur le châssis de poussette (10) en insérant les connecteurs (41) dans la paire de socles (2) respectivement ;
dans lequel le châssis de siège (3) comprend en outre :
une section de dossier (31), une section d'assise (32), et une paire de joints susceptibles d'être bloqués (4) qui connectent la section de dossier (31) et
la section d'assise (32) de manière à pouvoir être bloqués et capables de pivotement ;
dans lequel le châssis de siège (3) présente une configuration déployée (100) en bloquant les joints susceptibles d'être bloqués (4) pour retenir la section de dossier (31) dans une première position (30), et une configuration pliée (200) en débloquant les joints susceptibles d'être bloqués (4) afin de permettre à la section de dossier (31) de tourner jusqu'à une seconde position (40) ; et
un actionneur de libération (7) pour débloquer la paire de joints susceptibles d'être bloqués (4) en permettant ainsi à la section de dossier (31) de tourner depuis la première position (30) jusqu'à la seconde position (40),
dans lequel les connecteurs (41) sont formés chacun avec une pluralité de crans de première position (413), et les joints susceptibles d'être bloqués (4) incluent chacun :
une plaque (42) montée en pivotement sur les connecteurs (41) par un élément de pivot (411), la plaque (42) étant formée avec une pluralité de crans de seconde position (421) correspondant aux crans de première position (413) ;
une partie de joint supérieure (43), ayant une portion connectée à la section de dossier (31), et une portion en pivotement entre les connecteurs (41) et
la plaque (42), et formée avec des crans de troisième position (431) sur un côté de celle-ci ;
une partie de joint inférieure (44), ayant une portion connectée avec la section d'assise (32), et une portion en pivotement entre les connecteurs (41) et la plaque (42), et formée avec des crans de quatrième position (441) sur un côté de celle-ci ; et
un mécanisme de positionnement (6), fonctionnellement monté sur le châssis de siège (3) et en engagement libérable avec les crans de troisième position (431), les crans de quatrième position (441) et un des crans de première position (413) et des crans de seconde position (421), en positionnant ainsi le châssis de siège (3) dans une position d'inclinaison sélectionnée.

2. Châssis de poussette (10) et châssis de siège pliable et détachable selon la revendication 1, incluant en outre un mécanisme de positionnement (5) monté entre la paire de connecteurs (41) et la paire de socles (2) pour retenir la paire de connecteurs (41) dans la paire de socles (2).

3. Châssis de poussette (10) et châssis de siège pliable et détachable selon la revendication 2, dans lequel le mécanisme de positionnement (5) inclut :
deux portions d'engagement (53), formées dans les socles (2) respectivement ;
deux premiers boutons (51), montés sur les connecteurs (41) respectivement, les deux premiers boutons (51) étant sollicités par deux éléments élastiques (52) pour être engagés avec les portions d'engagement (53) pour empêcher que le châssis de siège (3) se sépare du châssis de poussette (10) ; et
les deux premiers boutons (51) peuvent être pressés contre les deux éléments élastiques (52) pour se dégager depuis les portions d'engagement (53), en libérant ainsi le châssis de siège (3) vis-à-vis du châssis de poussette (10).

4. Châssis de poussette (10) et châssis de siège pliable et détachable selon la revendication 1, dans lequel le mécanisme de positionnement (6) inclut :
deux éléments de verrou (61), montés avec faculté de rétraction à deux extrémités distales de la section de dossier (31) et sollicités par deux éléments élastiques (62) pour s'engager avec les crans de troisième position (431), les crans de quatrième position (441), et l'un des crans de première position (413) et des crans de seconde position (421) de manière à bloquer le châssis de siège (3) dans la position d'inclinaison sélectionnée ; un actionneur de libération (63) fonctionnellement monté sur la section de dossier (31) pour entraîner les deux éléments de verrou (61) à se désengager vis-à-vis des crans de première position (413), des crans deux seconde position (421), des crans de troisième position (431) et des crans de quatrième position (441), de manière à repositionner le châssis de siège (3) dans une autre position d'inclinaison ; et
une paire d'éléments de connexion (64) connectés entre l'actionneur de libération (63) et les deux éléments de verrou (61).

5. Châssis de poussette (10) et châssis de siège pliable et détachable selon la revendication 4, dans lequel l'actionneur de libération (63) est fonctionnellement monté sur une portion médiane de la section de dossier (31) pour une manipulation d'une seule main, et l'actionneur de libération (63) est associé avec les deux éléments de verrou (61) via la paire d'éléments de connexion (64).

6. Châssis de poussette (10) et châssis de siège pliable et détachable selon la revendication 4, dans lequel le mécanisme de positionnement (6) inclut deux actionneurs de libération (63) montés sur les deux côtés de la section de dossier (31), pour une manipulation avec les deux mains d'un utilisateur, et chacun des actionneurs de libération (63) est associé à l'un des deux éléments de verrou (61) via l'un de la paire d'éléments de connexion (64).

7. Châssis de poussette (10) et châssis de siège pliable et détachable selon la revendication 1, dans lequel les joints susceptibles d'être bloqués (4) incluent un élément coulissant (444) sollicité par un élément élastique (445) pour s'engager avec la partie de joint supérieure (43) et la partie de joint inférieure (44) en empêchant ainsi que la partie de joint supérieure (43) effectue une rotation par rapport à la partie de joint inférieure (44), et l'actionneur de libération (7) inclut un second bouton (71) pour presser l'élément coulissant (444) contre l'élément élastique (445) de manière à dégager l'élément coulissant (444) depuis l'une de la partie de joint supérieure (43) et la partie de joint inférieure (44), permettant ainsi à la section de dossier (31) de tourner depuis la première position (30) jusqu'à la seconde position (40).

8. Châssis de poussette (10) et châssis de siège pliable et détachable selon la revendication 7, dans lequel l'actionneur de libération (7) inclut en outre un élément d'association (72) monté de façon déplaçable entre l'élément coulissant (444) et le second bouton (71), quand le second bouton (71) est pressé contre l'élément élastique (445), l'élément d'association (72) étant entraîné pour pousser l'élément coulissant (444) et se dégager de la partie de joint supérieure (43) en débloquant ainsi les joints susceptibles d'être bloqués (4) depuis la configuration déployée (100).

9. Châssis de poussette (10) et châssis de siège pliable et détachable selon la revendication 1, dans lequel la partie de joint supérieure (43) est formée avec une première fente en arc (432), et le connecteur (41) comporte une broche (412) insérée dans la première fente en arc (432), en limitant ainsi la rotation de la partie de joint supérieure (43) dans une plage prédéterminée.

10. Châssis de poussette (10) et châssis de siège pliable et détachable selon la revendication 9, dans lequel la partie de joint inférieure (44) est formée avec une seconde fente en arc (442), et la broche (412) est insérée dans la première fente en arc (432) et la seconde fente en arc (442), en limitant ainsi l'inclinaison du châssis de siège (3) dans une plage ajustable.

11. Châssis de poussette (10) et châssis de siège pliable et détachable selon la revendication 1, dans lequel la partie de joint supérieure (43) est formée avec une première fente d'engagement (433) pour recevoir en coulissement une première portion de l'élément coulissant (444), et la partie de joint inférieure (44) est formée avec une seconde fente d'engagement (443) pour recevoir en coulissement une seconde portion de l'élément coulissant (444), dans lequel l'élément coulissant (444) peut être entraîné par l'actionneur de libération (7) pour quitter l'une de la première fente d'engagement (433) et de la seconde fente d'engagement (443) en débloquant ainsi la paire de joints susceptibles d'être bloqués (4).
